# NEW EUROPEAN PATENT SPECIFICATION

(11) **EP 0 688 630 B2**
(45) Date of publication and mention of the opposition decision: **09.06.2010**
(45) Mention of the grant of the patent: 16.08.2001
(21) Application number: 95304265.2
(22) Date of filing: 20.06.1995
(51) Int. Cl.: B23K 35/368, B23K 103/04

(54) **Flux-cored wire for gas shielded arc welding**
Fülldraht zum Lichtbogenschweissen in Schutzgas
Fil fourré le soudage à l'arc sous gaz protecteur

(30) Priority: 24.06.1994 JP 14352294; 30.09.1994 JP 23821194
(43) Date of publication of application: 27.12.1995
(73) Proprietor: KABUSHIKI KAISHA KOBE SEIKO SHO also known as Kobe Steel Ltd., Kobe 651 (JP)
(72) Inventor: Sakia, Yoshiya, c/o Fujisawa Plant, Fujisawa-shi, Kanagawa-ken, 251 (JP); Aida, Isao, c/o Fujisawa Plant, Fujisawa-shi, Kanagawa-ken, 251 (JP); Kurokawa, Tsuyoshi, c/o Fujisawa Plant, Fujisawa-shi, Kanagawa-ken, 251 (JP); Hosoi, Koichi, c/o Fujisawa Plant, Fujisawa-shi, Kanagawa-ken, 251 (JP); Yajima, Kenji, c/o Fujisawa Plant, Fujisawa-shi, Kanagawa-ken, 251 (JP)
(74) Representative: Gillard, Richard Edward

(56) References cited:
- EP-A- 0 600 293
- EP-A2- 0 600 293
- JP-A- 4 300 092
- JP-A- 5 057 478
- JP-A- 5 077 086
- JP-A- 02 192 894
- JP-A- 04 300 092
- US-A- 4 366 364
- US-A- 4 465 921
- PATENT ABSTRACTS OF JAPAN vol. 17 no. 395 (M-1451) ,23 July 1993 & JP-A-05 077086 (KOBE STEEL) 30 March 1993,
- PATENT ABSTRACTS OF JAPAN vol. 17 no. 114 (M-1377) ,9 March 1993 & JP-A-04 300092 (KOBE STEEL) 23 October 1992,
- PATENT ABSTRACTS OF JAPAN vol. 14 no. 478 (M-1036) ,18 October 1990 & JP-A-02 192894 (NIPPON STEEL) 30 July 1990,
- Programme du Séminaire Technique intitulé "Flux Cored Arc Process Application to Pressure Vessels", ayant eu lieu à CALGARY, ALBERTA, le 23 mars 1993
- Certificat d'Analyse de RUTILE disponible à l'achat auprès de Richards Bay Minerals (RBM) daté du 04 octobre 1993
- Présentation Technique "Flux Cored Arc Process Application to Pressure Vessels" ayant été faite par Canadian Air Liquid durant le Séminaire du 23 mars 1993
- Progress Report, article de Richards Bay Minerals (RBM) daté de septembre 1977, pp. 1 à 4
- Traitement des Métaux, Article M 1365, Traitements thermiques associés au soudage des aciers, C. Bonnet, de juillet 1987, pp. 1 à 12
- RELATIONSHIPS BETWEEN THE PROPERTIES OF THE WELD METALS MICROALLOYED WITH V AND NB, THEIR STRUCTURE AND SUBSTRUCTURE, J. BOSANSKY & G. M. EVANS, WELDING INTERNATIONAL DE 1992, 1992, pages 1 - 6
- G. M. EVANS EFFECTS OF NIOBIUM IN MANGANESE CONTAINING MMA WELD DEPOSITS 1993, WELDING INTERNATIONAL, pages 518 - 528
- Inhaltsverzeichnis, Oerlikon Schweissmitteilungen, no. 127, the effect of niobium in manganese containing MMA weld deposits by G.M. Evans, publié en octobre 1991, pp. 24-35
- IIW Commission II (Arc Welding), The Effect of Niobium containing MMA Weld Deposits G.M. Evans Doc II-A-843, 1991
- IIW Commission II (Arc Welding), The Effect of Vanadium containing MMA Weld deposits G.M. Evans, Doc II-A-842, 1991
- IIW SC IX working program, State of the Art Review on Effect of PWHT on properties of steel weld metal; p.4, Mars 1994

## Description

### BACKGROUND OF THE INVENTION

### 1. Field of the Invention

The present invention relates to the use of a flux-cored wire for gas shielded arc welding including a steel sheath and a titania-based flux filled in the steel sheath, and particularly to the use of a flux-cored wire for gas shielded arc welding which is excellent in usability characteristics in all position welding and also in low temperature toughness, and which is applicable for a material specification requiring post-welding heat treatment (performed for softening weld heat-affected zone, improving ductility and notch toughness of weld, and releasing welding residual stress: hereinafter, referred to as "PWHT").

### 2. Description of the Related Art

In recent years, the development of energy resources have come to be expanded in the polar regions and in the deep-seas, and consequently, steels and welding materials used in the development of energy resources have been required to be excellent in low temperature toughness. With this regard, although a titania-based flux-cored wire for gas shielded arc welding is excellent in usability characteristics in all position welding and high in welding efficiency, it is disadvantageous in that the yield of oxygen in weld is high. As a result, the titania-based flux-cored wire has been generally applicable, in a material specification of being as-welded (hereinafter, referred to as "AS WELD"), only for environments at a temperature of about -30°C or more.

On the contrary, a basic wire is relatively low in the yield of oxygen in weld and thereby it can give excellent low temperature toughness to weld metal in either of the material specifications of AS WELD and PWHT; however, the basic wire is significantly poor in usability characteristics in all position welding as compared with the above-described titania-based flux-cored wire, and it has presented various disadvantages in practical use.

In recent years, a titania-based flux-cored wire applicable for low temperature environments in the range of from -60 to -80°C obtained by the combination effect of alloys such as Ti, B, Mg, and Ni has been disclosed, for example in Japanese Patent Publication No. 1407581. This wire, however, is mainly developed to be applicable for the material specification of AS WELD, and therefore, it is difficult to be sufficiently applicable for the specification of PWHT. This prior art wire is also difficult to sufficiently satisfy a high toughness requirement such as a COD characteristic.

A technique of increasing the content of fluoride in flux for improving the low temperature toughness containing the COD characteristic, has been proposed in Examined Japanese Patent Publication No. HEI 5-45360. This technique, however, is difficult to be applicable for all position welding because the generated amount of welding fume and spatter are large and the basicity of slag is increased linearly with the added amounts of CaF₂ and BaF₂ and thereby weldability in vertical position welding is significantly deteriorated.

As described above, conventionally, there has been known no wire capable of realizing both excellent usability characteristics in all position welding and excellent low temperature toughness in the material specifications of AS WELD and PWHT.

It has been known that the yields of Nb, V and P in weld metal exert an effect on the toughness of the weld metal after being subjected to stress relief annealing; however, the knowledges have been obtained with respect to shielded metal arc welding, submerged arc welding or MIG welding in which the amount of oxygen in weld metal is relatively low, and further in the knowledges, the applicable temperature has been only in the range of about -40°C or more.

It has been commonly known that weld metal formed using a prior art titania-based flux-cored wire (as exemplified by JP-A-05 077086, JP-A-04 300092 and JP-A-02 192894) is high in the amounts of Nb and V, and thereby it is embrittled by PWHT; however, allowable ranges of the contents of Nb, V and P capable of realizing an excellent low temperature toughness in a weld metal in which the amount of oxygen is high just as that formed by the titania-based flux-cored wire, have been unclear, and they have not sufficiently examined, particularly, in the low temperature range of from -60 to -80°C.

### SUMMARY OF THE INVENTION

An object of the present invention is to provide the use of a titania-based flux-cored wire for gas shielded arc welding which is excellent in toughness such as a Charpy impact value and COD value under the material specifications of AS WELD and PWHT at low temperature environments in the range of from -60 to -80°C required for LPG ships, LNG ships and offshore structures in ice sea areas, and simultaneously excellent in all position welding.

The present invention provides the use of a flux-cored wire for gas shielded arc welding of a steel and using the welded steel in low temperature environments in a range of from -60 to -80°C, wherein the wire includes a steel sheath and a titania-based flux filled in said steel sheath, containing, based on the total weight of said wire,
3 to 9% of titanium oxide (TiO₂-converted value) having
   a bulk specific density of 1.0 to 4.0,
   a water content (measured at 450°C in Ar atmosphere by KF method) of 1000 ppm or less, and
   a maximum particle size of 500 µm or less,
   and 0.0001 to 0.0120% of Nb,
wherein said wire further contains 0.02% or less of V, 0.0001 to 0.0150% of (Nb + 0.5xV), and 0.02% or less of P,
   and
wherein titanium oxide filled in said flux contains as impurities, on the basis of the total weight of said titanium oxide,
0.05% or less of Nb,
0.08% or less of V, and
0.07% or less of (Nb + 0.5xV).

The flux-cored wire preferably contains
0.0001 to 0.0100% of Nb,
wherein said wire further contains 0.015% or less of V,
0.0010-0.0100% of (Nb + 0.5xV), and
0.015% or less of P.

Either or both of said steel sheath and said flux preferably contain, on the basis of the total weight of said wire,
0.1 to 1.2% of Si,
1.0 to 3.0% of Mn,
0.001 to 0.025% of B, and
0.01 to 0.30% of metal fluoride (F-converted value).

The steel sheath preferably contains, on the basis of the total weight of said steel sheath,
0.010% or less of P.

The titanium oxide preferably contains as impurities, on the basis of the total weight of said titanium oxide,
0.05% or less of P, and
0.5% or less of Ca.

The titanium oxide preferably has
a water content (measured at 450°C in Ar atmosphere by KF method) of 700 ppm or less, and
a particle size distribution of from 50 to 400 µm.

The flux preferably contains, on the basis of the total weight of said wire,
0.01 to 1.0% of an arc stabilizer;
0.1 to 3.0% of a slag forming agent;
5.0% or less of a deoxidizer;
1.0% or less of a dehydrogenating agent, and
at least one of the following: 0.2 to 0.8% of Mg, 5.0% or less of Ni, 13.0% or less of Cr, 3.0% or less of Mo, and 0.1% or less of C.

The flux preferably contains, on the basis of the total weight of said wire,
at least one of the following: 1 to 4% of Ni, 0.2 to 3.5% of Cr, 0.1 to 1.1% of Mo, and 0.5% or less of A1 and/or Zr.

### BRIEF DESCRIPTION OF THE DRAWINGS

Fig. 1 is a graph showing the relationship between the amount of Nb (indicated logarithmically) in a wire and the impact value of weld metal;
Fig. 2 is a graph showing the relationship between the amount of V (indicated logarithmically) in a wire and the impact value of weld metal;
Fig. 3 is a graph showing the relationship between the amount of (Nb + 0.5V) (indicated logarithmically) in a wire and the impact value of weld metal;
Fig. 4 is a graph showing the relationship between the amount of P in a wire and the impact value of weld metal;
Fig. 5 is a graph showing the relationship between the amount of Nb in a titanium oxide contained in a flux and the impact value of weld metal;
Fig. 6 is a graph showing the relationship between the amount of V in a titanium oxide contained in a flux and the impact value of weld metal;
Fig. 7 is a graph showing the relationship between the amount of (Nb + 0.5V) in a titanium oxide contained in a flux and the impact value of weld metal;
Fig. 8 is a graph showing the relationship between the amount of P in a titanium oxide contained in a flux and the impact value of weld metal;
Fig. 9 is a graph showing the relationship between the amount of Ca in a titanium oxide contained in a flux and the impact value of weld metal; and
Figs. 10A to 10D are views showing sectional shapes of flux-cored wires for gas shielded arc welding.

### DETAILED DESCRIPTION OF THE PREFERRED EMBODIMENTS

The present inventors have variously examined to improve the toughness of weld metal formed by a titania-based flux-cored wire, and found that when the weld metal containing Nb and V in amounts more than specified values is heated at about 600°C or more, it is significantly deteriorated in toughness because of precipitation of fine carbides and nitrides thereof. On the basis of the knowledge, the present inventors have examined suitable ranges of the contents of Nb and V in weld metal in terms of the composition of a titania based flux-cored wire.

In the prior art titania-based flux-cored wire, since the amount of oxygen in weld metal is generally as high as about 700-900 ppm, it is difficult to obtain a sufficient crystal grain refining effect, and hence to obtain an excellent low temperature toughness of weld metal in a temperature range of -30°C or less. It is well known that the addition of Mg in a flux is effective to lower the amount of oxygen in weld metal somewhat, and to improve the low temperature toughness of weld metal under the material specification of AS WELD. This technique, however, is insufficient to improve the low temperature toughness of weld metal under the material specification of PWHT, and in some PWHT condition, the weld metal cannot satisfy even the impact performance required for environments at 0°C. To satisfy the above inconvenience, conventionally, an attempt has been made to lower the amount of oxygen in weld metal using a basic flux-cored wire. Thus, the titania-based flux-cored wire has failed to sufficiently satisfy the requirements for weld metal under the material specification of PWHT.

In view of the foregoing, the present inventors have experimentally examined to improve the low temperature toughness of weld metal formed using a titania-based flux-cored wire, and found that even in the case of the titania-based flux-cored wire of forming weld metal containing oxygen in a large amount, it becomes possible to obtain an excellent low temperature toughness of weld metal under either of the material specifications of AS WELD and PWHT in a low temperature range by limiting the amounts of Nb, V end P in the wire in specified ranges, or by limiting the amount of a titanium oxide in the titania-based flux in a specified amount.

Hereinafter, the reasons for adding each component of a titania-based flux-cored wire and for limiting the amount of the component will be described.

### Titanium Oxide

A titanium oxide is required to be contained in an amount of from 3 to 9% (TiO₂-converted value) based on the total weight of a wire. When the content of the titanium oxide is less than 3.0%, the excellent appearance and shape of beads cannot be obtained, and the generated amount of spatter is increased. In particular, the hanging of beads is significantly generated and thereby a preferable weld cannot be obtained in the vertical position welding and overhead position welding. On the contrary, when it is more than 9.0%, the generated amount of slag and slag viscosity are excessively increased, so that slag inclusion is generated and also usability characteristics are deteriorated.

Specific sources of TiO₂ include natural rutile, synthetic rutile, reduction ilmenite, leucoxene, ilmenite, and potassium titanate.

### Nb, V and (Nb + 0.5xV)

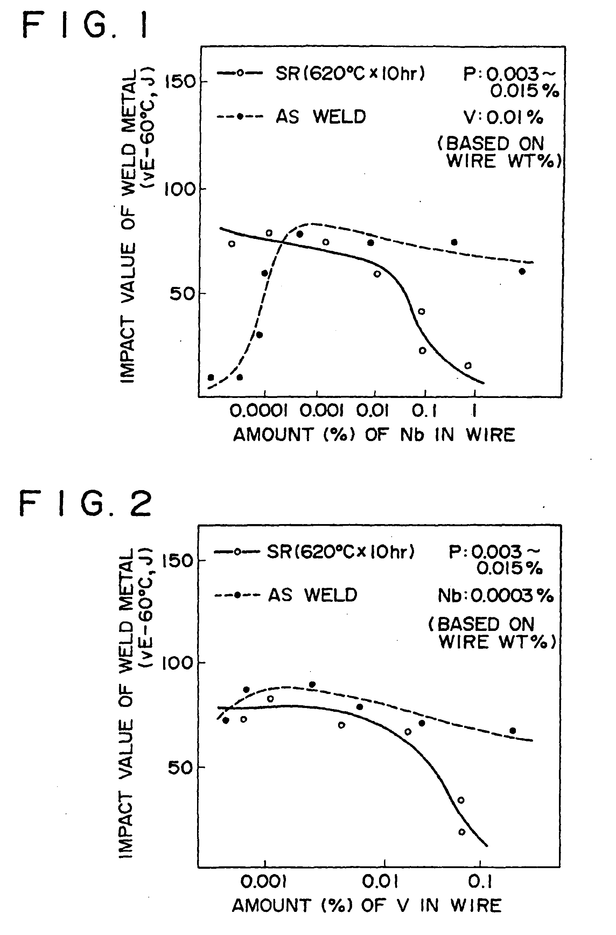

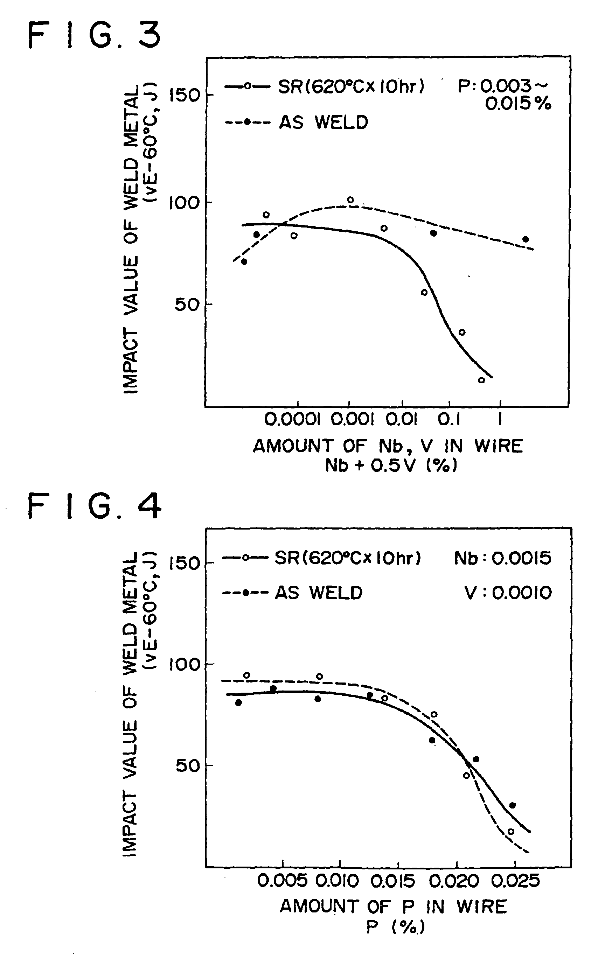

Fig. 1 is a graph showing the relationship between the amount of Nb in a wire and the impact value of weld metal, wherein, the abscissa indicates the amount (wt%) of Nb in a wire and the ordinate indicates the impact value (vE-60°C, J) of weld metal at -60°C. In the figure, the white circle indicates the impact value of the weld metal subjected to stress relief annealing (SR) heated for 10 hours at 620°C, and the black circle indicates the impact value of the weld metal as welded (AS WELD). Similarly, Fig. 2 is a graph showing the relationship between the amount of V in a wire and the impact value of weld metal, and Fig. 3 is a graph showing the relationship between the amount of (Nb + 0.5xV) in a wire and the impact value of weld metal.

The addition of Nb or V only in a slight amount exerts an effect on the crystal structure and mechanical properties of weld metal. When added in a suitable amount, Nb or V is uniformly dispersed in the crystal structure of weld metal in the form of a carbide or nitride and acts as the nuclei of generation of fine acicular ferrite, and also Nb or V is effective to enhance the toughness and strength of weld metal because it fixes nitrogen as an impurity. In particular, Nb is significantly effective to suppress the reduction in the toughness of the unaffected zone of the weld metal under the material specification of AS WELD.

As is apparent from Fig. 1, to improve the toughness, Nb must be added in an amount of 0.0001% or more based on the total weight of a wire. On the contrary, when Nb and V are added in a wire in amounts of 0.0120% or more and 0.02% or more respectively, carbides and nitrides of Nb and V are formed in large amounts in the re-heated zone of weld metal, to harden the zone and deteriorate the toughness of the weld metal. When weld metal is subjected to stress relief annealing, the precipitation of carbides of Nb and V is expanded over the crystal structure similarly to the case of re-heated zone of the weld metal under the material specification of AS WELD, to thus further significantly deteriorate the toughness of the weld metal. Consequently, as is apparent from Fig. 2, in the case of SR treatment, it is desirable that the amount of V is limited to 0.015% or less.

In addition, Nb is different from V in terms of the additional effect exerted on the deterioration of toughness, and the total effect of Nb and V on the deterioration of toughness is suitably expressed by the equation of (Nb + 0.5xV). The value of (Nb + 0.5xV) is required to be in the range of from 0.0001 to 0.0150%. The upper and lower limits of (Nb + 0.5xV) are determined in accordance with the above-described reason in the case of the single addition of Nb or V.

The amounts of Nb, V and (Nb + 0.5xV) are preferably specified to be in the ranges of: 0.0001 to 0.01% (Nb); 0.015% or less (V); and 0.0010 to 0.01% (Nb + 0.5xV) based on the total weight of a wire. This is required to obtain a high fracture toughness (for example, COD value (at -10°C>=0.25 mm under the material specifications of AS WELD AND PWHT).

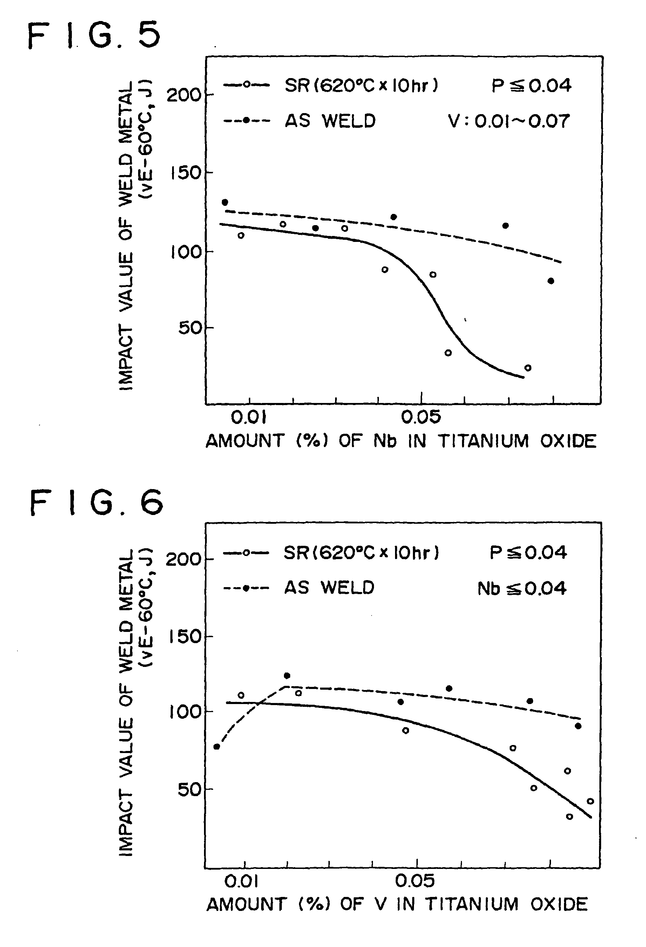

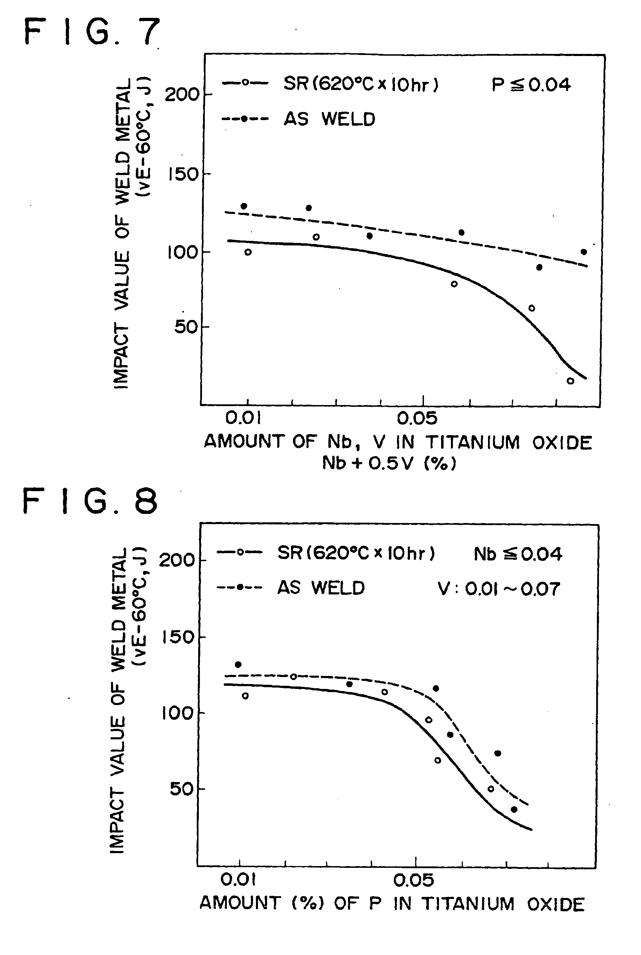

Next, the content of Nb, V and (Nb + 0.5xV) in a flux, based on the total weight of titanium oxide, has been examined. Fig. 5 is a graph showing the relationship between the amount (wt%) of Nb in a titanium oxide and the impact value of weld metal, wherein the abscissa indicates the amount (wt%) of Nb in a titanium oxide and the ordinate indicates the impact value (vE-60°C, J) of weld metal at -60°C. In the figure the white circle indicates the impact value of weld metal subjected to stress relief ahnealing (SR) for 10 hours at 620°C, and the black circle indicates the impact value of weld metal as welded (AS WELD). Similarly, Fig. 6 is a graph showing the relationship between the amount of V in a titanium oxide and the impact value of weld metal; and Fig. 7 is a graph showing the relationship between the amount of (Nb + 0.5xV) in a titanium oxide and the impact value of weld metal.

As is apparent from Figs. 5 and 6, when Nb and V are contained in a titanium oxide contained in a flux in amounts of 0.05% or more and 0.08% or more respectively, Nb and V are precipitated and carbides and nitrides are generated in large amounts in the re-heated zone of weld metal, to harden the zone and to deteriorate the toughness of the weld metal.

When weld metal is subjected to stress relief annealing, the precipitation of carbides of Nb and V is expanded over the crystal structure similarly to the case of re-heated zone of the weld metal under the material specification of AS WELD, to thus further significantly deteriorate the toughness of the weld metal. Accordingly, the amounts of Nb and V in a titanium oxide contained in a flux are specified to be in the ranges of 0.05% or less and 0.08% or less, respectively.

As is shown in Fig. 7, when the value of (Nb + 0.5xV) suitably expressing the total deterioration of toughness of Nb and V is more than 0.07%, the toughness of weld metal is deteriorated. Accordingly, the value of (Nb + 0.5xV) is specified to be in the range of 0.07% or less.

The amounts of Nb, V and (Nb + 0.5xV) in a flux, based on the total weight of a titanium oxide, are preferably specified to be in the ranges of: 0.04% or less (Nb); 0.01 to 0.07% (V); and 0.06% or less (Nb + 0.5xV). This is required to obtain a high notch toughness and a high fracture toughness. The addition of Nb or V only in a slight amount exerts an effect on the crystal structure and mechanical properties of weld metal. When added in a suitable amount, Nb or V is uniformly dispersed in the crystal structure of weld metal in the form of a carbide or nitride and acts as the nuclei of generation of fine acicular ferrite, and also Nb or V is effective to enhance the toughness and strength of weld metal because it fixes nitrogen as an impurity. Moreover, V is effective to increase the starting temperature of crystal growth. Accordingly, the amount of V in a titanium oxide is preferably specified to be in the range of from 0.01% or more.

### P

P is an element of exerting a large effect on low temperature toughness. When the content of P is increased, the toughness is deteriorated and the generated amount of spatter is increased. As is shown in Fig. 4, P is precipitated in the form a brittle compound at grain boundaries by stress relief annealing, to thus deteriorate the toughness. In the addition of P in the range of 0.015% or less based on the total weight of a wire, approximately the same impact value can be obtained irrespective of the P content. When the P content is 0.015%, the impact value is slightly reduced, and when it is 0.020%, the impact value is significantly reduced. The addition of P exerts the same effect as in the Charpy impact value on the COD value. The P content, therefore, is required to be suppress at a value of 0.020% or less, preferably, at 0.015%.

Since P is entrapped in weld metal from a steel sheath more than from a flux, the P content in a steel sheath is required to be suppressed at a value of 0.010% or less for the above-described reason.

The amount of P in a titanium oxide in a flux was examined. As shown in Fig. 8, in the addition of P in a titanium oxide in the range of 0.05% or less, approximately the same Charpy impact value can be obtained irrespective of the P content. When the P content is 0.04%, the Charpy impact value is slightly reduced, and when it is 0.05%, the impact value is significantly reduced. The addition of P exerts the same effect as in the Charpy impact value on the COD value. The content of P in a titanium oxide, therefore, is required to be suppress at a value of 0.05% or less, preferably, at 0.04%.

### Si

Si is an element of improving the appearance and shape of beads and keeping the preferable usability characteristics. Moreover, Si is effective to accelerate the deoxidization of weld metal, and to be entrapped in weld metal for enhancing the strength thereof. These effects can be achieved by the addition of Si in an amount of 0.1% or more. However, when the Si content is more than 1.2%, the yield of Si in weld metal is excessively increased, with a result that crystal grains of weld metal are coarsened, thus reducing the notch roughness.

### Mn

Like Si, the addition of Mn in a suitable amount is effective to improve the appearance and shape of beads and also usability characteristics, and to accelerate the deoxidization of weld metal. Moreover, part of Mn is entrapped in weld metal, and it enhances the hardenability and refines the unaffected portion of the crystal structure, thereby enhancing the toughness and strength. To obtain these effects, Mn must be added in an amount of 1.0% or more. However, when the Mn content is more than 3.0%, the yield of Mn in weld metal is excessively increased, and thereby the strength is excessively increased, tending to generate cracks.

Sources of Mn and Si contained a flux include electrolytic Mn and alloys such as Fe-Mn, Fe-Si, and SiMn.

### B

The addition of B in an amount of 0.001% or more is effective to improve the notch toughness of weld metal. However, when the B content is more than 0.025%, the effect is abruptly reduced, and also the tensile strength is excessively increased by hardening, tending to generate cracks. In addition, B may be added in the form of an alloy such as Fe-B or in the form of a boron oxide. A boron alloy or boron oxide may be added in an amount of from 0.001 to 0.025% (B-converted value). A boron oxide is reduced during welding into B, to thus achieve the same effect.

### Metal Fluoride

A metal fluoride is effective to enhance arc stability and to enhance the low temperature toughness of weld metal by the dehydrogenation. The effect can be effectively achieved by the addition of a metal fluoride in an amount of 0.01% or more (F-converted value) based on the total weight of a wire. However, when the content of a metal fluoride (F-converted value) is more than 0.30%, the amounts of fume and spatter are increased, thus reducing the usability characteristics and further the slag flowability is excessively increased, thus deteriorating the bead shape. Specific examples of metal fluorides include fluorides of alkali metals and alkali earth metals such as Na, K, Li, Mg, and Ca.

### Ca

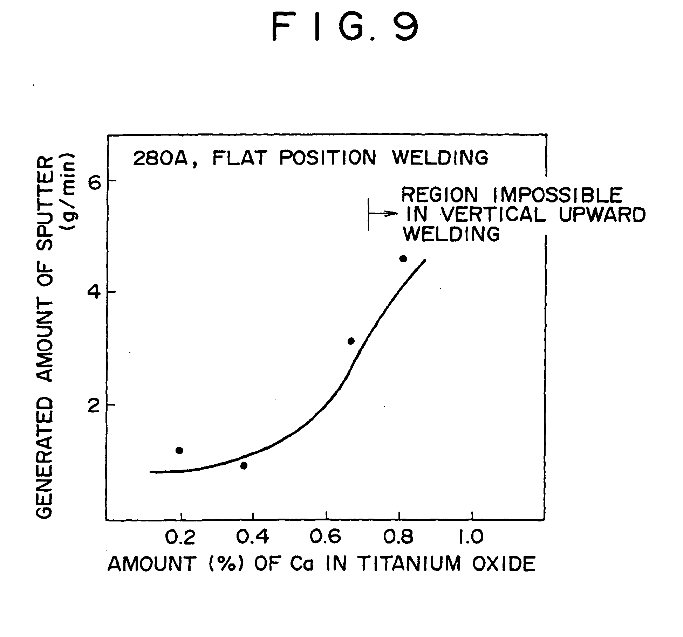

Ca is sometimes contained in a titanium oxide in a slight amount as an impurity. The presence of Ca contained in a titanium oxide exerts adverse effect on the usability characteristics. Fig. 9 is a graph showing the generated amount of spatter depending on the Ca content, wherein the abscissa indicates the content of Ca in a titanium oxide and the ordinate indicates the generated amount of spatter. As is apparent from Fig. 9, when the content of Ca in a titanium oxide is more than 0.5%, the generated amount of spatter is significantly increased, and the vertical upward position welding becomes significantly difficult. Accordingly, the content of Ca in a titanium oxide is specified to be in the range of 0.5% or less.

### Bulk Specific Gravity

To ensure excellent usability characteristics in all position welding using a flux-cored wire, the wire must be filled with a flux containing a titanium oxide in a suitable amount. In this case, when the bulk specific density of the titanium oxide is less than 1.0%, the wire cannot be filled with a flux containing the titanium oxide in a sufficient amount. When it is more than 4.0, the titanium oxide has nbt a good balance of the other flux materials, thus causing a problem such as the segregation. Accordingly, the bulk specific gravity of a titanium oxide is specified to be in the range of from 1.0 to 4.0. In the case of using a commercially available titanium oxide as a flux material for a flux-cored wire, the bulk specific gravity thereof must be adjusted by pre-treatment such as pelletizing, burning and crushing.

### Water Content

With respect to a titanium oxide used as a flux material for a flux-cored wire, the water content thereof also exerts an effect on weld metal. When the water content of a titanium oxide is more than 1000 ppm, gas defects are sometimes generated in weld metal, and further, when the amount of diffusive hydrogen in weld metal is increased, low temperature cracks tends to be generated. Accordingly, the water content of a titanium oxide is in the range of 1000 ppm or less, preferably, in the range of 700 ppm or less.

In addition, the water content of titanium oxide was measured in accordance with JIS K0113-1979 (General Rules for Methods of Potentiometric, Amperometric, and Coulometric Titrations). The detail conditions are as follows:
Titration: Coulometric Titration
Reagent: Karl Fischer Reagent
Measurement Temperature: 450°C
Atmospheric Gas: Argon

### Particle Size

The particle size of a titanium oxide exerts an effect on welding stability. Specifically, when the particle size of a titanium oxide is more than 500 *µ*m, breakage of a wire and segregation of a flux are generated, thus failing to obtain stable welding. Accordingly, the particle size of a titanium oxide is specified to be in the range of 500 *µ*m or less, preferably, in the range of from 50 to 400 *µ*m.

### Others

Although the essential elements contained in a flux used for the present invention have been described, the other alloy elements may be added in the ranges capable of satisfying the above-described requirements. For example, Mg may be added in an amount of from 0.2 to 0.8% based on the total weight of a wire, to largely reduce the amount of oxygen in weld metal without deteriorating the usability characteristics so much, and to further enhance the low temperature toughness at a temperature at about -60°C.

Ni may be added in an amount of 5.0% or less based on the total weight of a wire, to enhance the low temperature toughness without obstructing the usability characteristics. The addition of Ni is preferably specified to be in the range of from 1.0 to 4.0%.

The addition of Mo in an amount of 3.0% or less and/or Cr in an amount of 13.0% or less based on the total weight of a wire is effective to enhance the high temperature strength. The Mo content is preferably specified to be in the range of from 0.1 to 1.1%, and the Cr content is preferably specified to be in the range of from 0.2 to 3.5%.

The addition of C is specified to be in the range of 0.1% or less based on the total weight of a wire. When the C content is more than 0.1%, the usability characteristics is deteriorated because of the generation of fume and spatter in large amounts, and the mechanical properties of weld metal are deteriorated because the welding strength is excessively increased and thereby the crack resistance is deteriorated.

Moreover, to prevent the hanging of molten pool in vertical position welding, a deoxidizer or denitrizer such as Al, Zr or Ti may be added in an amount of 5.0% or less based on the total weight of a wire.

To improve the weather resistance, Ni, Cr or Cu may be added in a slight amount.

An arc stabilizer may be added in an amount of from 0.01 to 1.0% based on the total weight of a wire. Specific examples of arc stabilizers include oxides, carbonates and complex oxides of alkali metals such as K, Na and Li; compounds of rare earth elements such as Ce and La; and iron powder.

A slag forming agent may be added in an amount of from 0.1 to 3.0% based on the total weight of a wire. Specific examples of the slag forming agents include metal oxides such as SiO₂, ZrO₂, Al₂O₃, and MgO.

In addition, a dehydrogenating agent may be added in an amount of 1.0% or less based on the total weight of a wire. Specific examples of the dehydrogenating agents include fluorides of alkali metals and alkali earth metals.

A flux-cored wire is manufactured by filling a steel sheath with the titania-based flute having the above-described composition in accordance with the conventional manner. From the viewpoint of the filling of flux, the steel sheath may be formed of a cold-rolled or hot-rolled steel material excellent in deep drawability. The filling ratio of flux is not limited, but it is preferably in the range of from 10 to 30% based on the total weight of a wire.

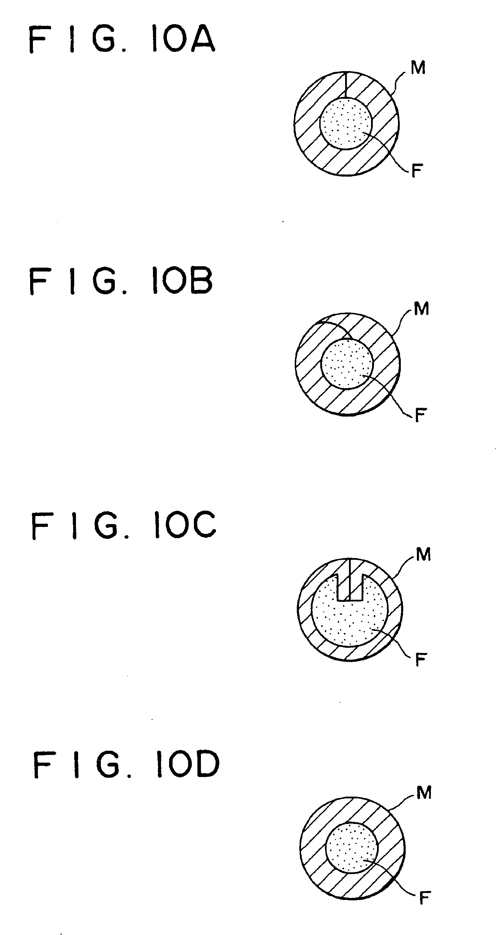

In addition, a wire can be formed in each of cross-sectional shapes shown in Figs. 10A to 10D; however, the cross-sectional shape of a wire is not limited thereto.

The wire shown in Fig. 10A is manufactured by a method of filling a band-like steel sheath M with a flux F, butting both the ends of the steel sheath against each other, bending the steel sheath M in a tubular shape, and drawing the steel sheath in a specified diameter. The butting end surface of the wire shown in Fig. 10A is flat. In the wire shown in Fig. 10B, the butting end surface is curved. In the wire shown in Fig. 10C, the butting end surface is bent in an L-shape, to widen the butting end surface. In the wire shown in Fig. 10D, a seamless steel sheath M is filled with a flux F.

In the case of the wire shown in Fig. 10D, the surface of the wire may be subjected to plating of Al or Cu in an amount of 0.05 to 0.30%. The wire diameter is not particularly limited, but may be selected from the values of 1.2, 1.4, 1.6, 2.0, 2.4 and 3.2 in accordance with the application.

The wire is used for gas shielded arc welding, and either of oxidizing, neutral or reducing shield gases may be used. As the general shielded gas, a gas of CO₂, Ar, O₂ or He, or a mixed gas of two or more kinds thereof may be used.

The present invention will be more clearly understood by way of the following examples.

Inventive uses were compared with comparative uses in terms of toughness of weld metal and usability characteristics.

Each test wire having a cross-sectional shape shown in Fig. 10B and having each composition shown in Table 1 was prepared. The welding test was carried out using the test wire under the following welding condition for Charpy impact test and COD test, and the weld metals under the material specifications of AS WELD and PWHT were examined in terms of toughness of weld metal and usability characteristics.

The welding condition is as follows:
Test Wire
   wire diameter: 1.2 mm
   cross-sectional shape: as shown in Fig. 10B
   flux filling ratio: 15%
Charpy Impact Test (in accordance with JIS Z3111)
   polarity: DCEP (wire: plus)
   welding current: 280 A
   welding voltage: 27 V
   test steel plate: BS4360 Gr50D
   shielded gas: 80%Ar-20%CO₂ mixed gas
   others: in accordance with JIS Z3133
COD Test (in accordance with BS7448-1991)
   polarity: DCEP
   welding current: 180-280 A
   welding voltage: suitable value
   Test steel plate: BS4360 Gr50D,
   plate thickness: 40 mm, X-bevel angle: 60° shielded gas: 80%Ar-20%CO₂ mixed gas

The test results are shown in Table 2

In particular, in each of Inventive Examples 8 and 9, the high temperature strength was high. In Inventive Example 10, the hanging in molten pool in vertical position welding was small.

As shown in Table 2, in each of Inventive Examples, the toughness of weld metal under the metal specifications of AS WELD and PWHT, particularly, the low temperature toughness at about -60°C required for LPG ships, LNG ships or offshore structures was excellent, and weldability in all position welding was also excellent. On the contrary, in each of Comparative Examples, the toughness of weld metal in the material specifications of AS WELD and PWHT was low or the usability characteristics were poor.

Next, the description of Inventive Examples and Comparative Examples will be made in which each component in a titanium oxide contained in a flux is limited.

Each test wire was prepared using each of flux compositions shown in Table 4 containing each of titanium oxides A to H shown in Table 3 in an amount of 6% based on the total weight of the wire. The welding test was carried out under the welding condition for Charpy impact test and COD test using the above-described test wire. The weld metals under the material specifications of AS WELD and PWHT were examined in terms of the toughness and usability characteristics. In addition, Tables 5 and 6 indicate flux compositions other than the titanium oxide.

The welding condition is the same as the previous welding condition (test wire, Charpy impact test and COD test).

The test results are shown in Table 7. As is apparent from Table 7, in Inventive Examples 1 to 4, and 9 to 12, the toughness was excellent and the usability characteristics were also excellent. On the contrary, in Comparative Examples 5 to 8, the toughness was small; the usability characteristics were poor; and in some cases, the wire was not suitably manufactured.

**Table 1 (No.1)**

| | No. | P(%) in steel sheath | Titanium oxide containing TiO₂(TiO₂-converted value) | Nb | V | Nb + 0.5V | Si | Mn |
|---|---|---|---|---|---|---|---|---|
| Inventive example | 1 | 0.008 | 4 | 0.00011 | 0.010 | 0.0051 | 0.8 | 1.3 |
| | 2 | 0.004 | 7 | 0.0110 | 0.001 | 0.0115 | 0.9 | 2.0 |
| | 3 | 0.006 | 8 | 0.006 | 0.015 | 0.0135 | 0.4 | 1.8 |
| | 4 | 0.009 | 7 | 0.0013 | 0.0010 | 0.0018 | 0.7 | 2.6 |
| | 5 | 0.008 | 3 | 0.0002 | 0.010 | 0.0052 | 0.4 | 2.0 |
| | 6 | 0.004 | 6 | 0.001 | 0.0010 | 0.0015 | 0.5 | 1.9 |
| | 7 | 0.006 | 9 | 0.005 | 0.005 | 0.0075 | 0.6 | 2.2 |
| | 8 | 0.009 | 7 | 0.0005 | 0.010 | 0.0055 | 0.5 | 1.9 |
| | 9 | 0.008 | 6 | 0.0004 | 0.002 | 0.0014 | 0.4 | 2.2 |
| | 10 | 0.004 | 7 | 0.010 | 0.003 | 0.0115 | 0.5 | 2.3 |
| Comparative example | 11 | 0.006 | 6 | 0.00005 | 0.0015 | 0.0008 | 0.3 | 1.2 |
| | 12 | 0.003 | 3 | 0.013 | 0.0001 | 0.0135 | 1.1 | 1.4 |
| | 13 | 0.003 | 4 | 0.0010 | 0.021 | 0.0115 | 0.8 | 2.4 |
| | 14 | 0.003 | 5 | 0.009 | 0.014 | 0.0160 | 0.5 | 2.0 |
| | 15 | 0.005 | 7 | 0.0018 | 0.010 | 0.0068 | 0.3 | 1.5 |
| | 16 | 0.012 | 4 | 0.004 | 0,005 | 0.0065 | 0.6 | 1.7 |

**Table 1 (No. 2)**

| | No. | Metal boride (B-converted value) | Metal fluroride (F-converted value) | P | Slag forming agent excluding TiO₂ | | | |
|---|---|---|---|---|---|---|---|---|
| | | | | | SiO₂ | ZrO₂ | Al₂O₃ | FeO |
| Inventive example | 1 | 0.023 | 0.08 | 0.011 | 0.3 | 0.1 | - | - |
| | 2 | 0.010 | 0.15 | 0.010 | 1.2 | 0.6 | 0.1 | - |
| | 3 | 0.002 | 0.09 | 0.015 | 0.4 | 0.2 | - | 0.1 |
| | 4 | 0.015 | 0.20 | 0.018 | 0.2 | 0.3 | - | 0.1 |
| | 5 | 0.005 | 0.02 | 0.011 | 0.4 | - | 0.1 | - |
| | 6 | 0.006 | 0,05 | 0.010 | 0.5 | - | - | - |
| | 7 | 0.007 | 0.10 | 0.015 | 0.3 | - | - | 0.1 |
| | 8 | 0.008 | 0.15 | 0.015 | 0.4 | 0.1 | 0.1 | - |
| | 9 | 0.005 | 0.03 | 0.010 | 0.5 | - | - | - |
| | 10 | 0.006 | 0.04 | 0.011 | 0.3 | - | - | - |
| Comparative example | 11 | 0.004 | 0.05 | 0.008 | 0.2 | 0.1 | - | - |
| | 12 | 0.004 | 0.23 | 0.012 | 0.4 | 0.4 | - | - |
| | 13 | 0.010 | 0.05 | 0.010 | 0.6 | 0.3 | - | - |
| | 14 | 0.015 | 0.04 | 0.008 | 0.1 | 0.2 | - | - |
| | 15 | 0.020 | 0.11 | 0.024 | 0.3 | 0.2 | 0.1 | - |
| | 16 | 0.004 | 0.08 | 0.021 | 0.2 | 0.2 | 0.2 | - |

**Table 1 (No. 3)**

| No. | | Ni | Mg | Fe | Ti | Others |
|---|---|---|---|---|---|---|
| Inventive example | 1 | 1.2 | 0.5 | 4.0 | - | - |
| | 2 | 0.1 | - | - | - | - |
| | 3 | 2.6 | - | 6.0 | - | - |
| | 4 | - | 0.4 | 4.5 | - | - |
| | 5 | 1.4 | - | 4.0 | - | - |
| | 6 | 1.4 | - | 4.0 | - | - |
| | 7 | - | - | 4.1 | 0.01 | - |
| | 8 | - | - | 3.8 | - | Mo = 0.5 |
| | 9 | - | - | 4.0 | - | Cr = 0.2 |
| | 10 | - | - | 3.8 | - | Al = 0.1 |
| | | | | | | Zr = 0.1 |
| Comparative example | 11 | 3.6 | 0.7 | 3.0 | - | - |
| | 12 | 1.1 | 0.5 | 5.0 | - | - |
| | 13 | 0.5 | 0.2 | 2.3 | - | - |
| | 14 | - | 0.1 | 6.0 | 0.01 | - |
| | 15 | - | - | 1.5 | - | - |
| | 16 | 2.3 | 0.3 | 2.8 | - | - |

**Table 2**

| | No. | Charpy impact value at-60°C (vE - 60°C, J) | | COD value at-10°C δ_{c} (mm) | | Usability characteristics |
|---|---|---|---|---|---|---|
| | | As weld | SR (620°C × 10hr) | As weld | SR (620°C × 10hr) | |
| Inventive example | 1 | 83 | 80 | 0.80 | 1.40 | Excellent |
| | 2 | 70 | 64 | 1.20 | 0.56 | Excellent |
| | 3 | 73 | 68 | 0.82 | 0.70 | Excellent |
| | 4 | 125 | 120 | 0.90 | 0.60 | Excellent |
| | 5 | 102 | 104 | 1.30 | 1.32 | Excellent |
| | 6 | 110 | 110 | 1.02 | 1.00 | Excellent |
| | 7 | 100 | 85 | 1.08 | 0.84 | Excellent |
| | 8 | 111 | 92 | 1.32 | 0.93 | Excellent |
| | 9 | 110 | 71 | 0.94 | 0.82 | Excellent |
| | 10 | 103 | 82 | 1.13 | 0.75 | Excellent |
| Comparative example | 11 | 13 | 78 | 0.10 | 2.30 | Excellent |
| | 12 | 50 | 10 | 0.40 | 0.11 | Excellent |
| | 13 | 58 | 26 | 0.68 | 0.15 | Excellent |
| | 14 | 50 | 15 | 0.52 | 0.11 | Excellent |
| | 15 | 26 | 21 | 0.18 | 0.10 | Large amount of spatter |
| | 16 | 24 | 13 | 0.10 | 0.10 | Large amount of spatter |

**Table 3**

| Composition of titanium oxide (wt%) | TiO₂ | Nb | V | P | Ca | Others | Bulk specific gravity | Water content (ppm) | Particle size (*µ*m) |
|---|---|---|---|---|---|---|---|---|---|
| Titanium oxide A | 98.0 | 0.03 | 0.02 | 0.02 | 0.1 | 1.83 | 1.5 | 450 | ≦450 |
| Titanium oxide B | 97.4 | 0.0005 | 0.06 | 0.03 | 0.01 | 2.50 | 2.4 | 700 | ≦350 |
| Titanium oxide C | 96.4 | 0.01 | 0.03 | 0.01 | tr | 3.55 | 2.0 | 650 | ≦200 |
| Titanium oxide D | 97.8 | 0.01 | 0.01 | 0.01 | 0.25 | 1.92 | 3.2 | 750 | ≦470 |
| Titanium oxide E | 95.8 | 0.08 | 0.03 | 0.02 | tr | 4.07 | 2.6 | 1200 | ≦430 |
| Titanium oxide F | 96.3 | 0.03 | 0.12 | 0.01 | tr | 3.54 | 3.6 | 370 | ≦600 |
| Titanium oxide G | 98.2 | 0.05 | 0.06 | 0.07 | tr | 1.62 | 2.8 | 790 | ≦250 |
| Titanium oxide H | 96.9 | 0.04 | 0.08 | 0.04 | 0.7 | 2.24 | 4.3 | 600 | ≦300 |

Others are FeO, ZrO₂, S, SiO₂ and the like.

**Table 4 (No. 1)**

| Slag forming agent/arc stabilizer (based on wire wt%) | | | | | | | |
|---|---|---|---|---|---|---|---|
| Titanium oxide | SiO₂ | Al₂O₃ | ZrO₂ | Fe₂O₃ | K₂O | Na₂O | K₂SiF₆ |
| 6.0 | 0.6 | 0.05 | 0.5 | 0.1 | 0.01 | 0.03 | 0.1 |

**Table 4 (No. 2)**

| Alloy/deoxidizing element (based on wire wt%) | | | | | | | Fe |
|---|---|---|---|---|---|---|---|
| C | Si | Mn | Ti | B | Ni | Mg | |
| 0.03 | 0.6 | 2.0 | 0.05 | 0.01 | 0.9 | 0.5 | 0.7 |

**Table 5**

| | No. | Slag forming agent/are stabilizer (based on wire wt%) | | | | | | |
|---|---|---|---|---|---|---|---|---|
| | | Titanium oxide* | SiO₂ | Al₂O₃ | ZrO₂ | FeO | Fe₂O₃ | MgO |
| Inventive example | 1 | 6.0 (A) | 0.6 | 0.05 | 0.5 | 0.2 | - | - |
| | 2 | 4.3 (B) | 0.4 | 0.01 | 0.2 | 0.1 | - | - |
| | 3 | 5.6 (C) | 0.3 | - | 0.1 | - | 0.1 | - |
| | 4 | 5.2(D) | 0.5 | 0.03 | 0.3 | - | 0.2 | 0.1 |
| Comparative example | 5 | 6.5 (E) | 0.2 | 0.02 | 0.3 | 0.1 | - | - |
| | 6 | 5.0(F) | 0.3 | - | 0.1 | 0.1 | - | 0.1 |
| | 7 | 4.8 (G) | 0.5 | 0.02 | 0.3 | 0.2 | - | 0.1 |
| | 8 | 6.1 (H) | 0.6 | 0.04 | 0.4 | - | 0.2 | - |
| Inventive example | 9 | 7,0 (A) | 0.4 | 0.01 | 0.4 | - | 0.3 | - |
| | 10 | 5.5 (B) | 0.5 | - | 0.6 | - | 0.2 | - |
| | 11 | 6.9 (C) | 0.2 | - | - | - | 0.1 | - |
| | 12 | 4.6 (D) | 0.4 | - | 0.1 | - | - | 0.1 |

| | | | | | | | | |
|---|---|---|---|---|---|---|---|---|
| * Each character in ( ) indicates the kind of titanium oxide. | | | | | | | | |

**Table 6**

| | No. | Alloy/deoxidizing element (based on wire wt%) | | | | | | | Fe |
|---|---|---|---|---|---|---|---|---|---|
| | | C | Si | Mn | Ti | B | Ni | Mg | |
| Inventive example | 1 | 0.03 | 0.6 | 2.1 | 0.02 | 0.01 | 0.7 | 0.6 | 0.6 |
| | 2 | 0.01 | 0.3 | 1.8 | 0.01 | 0.01 | 1.3 | 0.3 | 0.4 |
| | 3 | 0.04 | 0.5 | 2.2 | 0.01 | 0.01 | 0.8 | 0.4 | 0.7 |
| | 4 | 0.02 | 0.4 | 1.9 | 0.03 | 0.02 | 0.9 | 0.6 | 0.9 |
| Comparative example | 5 | 0.03 | 0.4 | 2.0 | 0.01 | 0.01 | 0.8 | 0.5 | 0.8 |
| | 6 | 0.04 | 0.3 | 1.7 | 0.02 | 0.01 | 1.0 | 0.1 | 0.5 |
| | 7 | 0.04 | 0.5 | 1.9 | 0.04 | 0.01 | 0.9 | 0.4 | 0.6 |
| | 8 | 0.03 | 0.6 | 1.9 | 0.02 | 0.01 | 0.8 | 0.6 | 0.7 |
| Inventive example | 9 | 0.04 | 0.5 | 2.0 | 0.04 | 0.02 | 0.9 | 0.7 | 0.5 |
| | 10 | 0.04 | 0.4 | 1.9 | 0.03 | 0.02 | 1.0 | 0.5 | 0.4 |
| | 11 | 0.03 | 0.5 | 1.8 | 0.01 | 0.01 | 0.9 | 0.4 | 0.6 |
| | 12 | 0.02 | 0.3 | 2.0 | 0.01 | 0.01 | 0.8 | 0.5 | 0.7 |

**Table 7**

| | No. | Flux ratio (%) | Charpy impact value (VE-60°C, J) | | COD value at -10°C δ_{c} (mm) | | Others |
|---|---|---|---|---|---|---|---|
| | | | As weld | SR (620°C × 10hr) | As weld | SR (620°C × 10hr) | |
| Inventive example | 1 | 15 | 98 | 85 | 1.03 | 0.92 | Excellent in usability characteristics |
| | 2 | 15 | 120 | 93 | 1.20 | 0.78 | |
| | 3 | 13 | 100 | 89 | 1.21 | 1.03 | |
| | 4 | 17 | 110 | 120 | 1.10 | 0.95 | |
| Comparative example | 5 | 16 | 95 | 13 | 0.22 | 0.11 | Large amount of diffusive hydrogen |
| | 6 | 12 | 63 | 20 | 0.23 | 0.20 | Breakage in drawing Large amount of spatter |
| | 7 | 18 | 43 | 15 | 0.18 | 0.17 | |
| | 8 | 14 | 70 | 25 | 1.05 | 0.90 | Large amount of spatter Segregation of flux |
| Inventive example | 9 | 12 | 150 | 101 | 1.21 | 1.10 | Excellent in usability characteristics |
| | 10 | 10 | 130 | 110 | 1.00 | 0.86 | |
| | 11 | 19 | 110 | 100 | 1.09 | 0.85 | |
| | 12 | 15 | 99 | 86 | 1.20 | 0.90 | |

## Claims

1. Use of a flux-cored wire for gas shielded arc welding of a steel and using the welded stell in low temperature environments in a range of from -60 to -80°C, wherein the wire includes a steel sheath and a titania-based flux filled in the steel sheath containing, based on the total weight of the wire,
3 to 9% of titanium oxide (TiO₂-converted value) having a bulk specific density of 1.0 to 4.0, a water content (measured at 450°C in Ar atmosphere by KF method of 1000 ppm or less, and a maximum particle size of 500 µm or less, and
0.0001 to 0.0120% of Nb,
wherein said wire further contains 0.02% or less of V,
0.0001 to 0.0150% of (Nb + 0.5xV), and
0.02% or less ofP,
and
wherein titanium oxide filled in said flux contains as impurities, on the basis of the total weight of said titanium oxide,
0.05% or less of Nb,
0.08% or less of V, and
0.07% or less of (Nb+0.5xV).

2. The use according to claim 1, wherein the wire contains
0.0001 to 0.0100% of Nb,
wherein said wire further contains 0.015% or less of V,
0.0010-0.0100% of (Nb + 0.5xV), and
0.015% or less of P.

3. The use according to claims 1 or 2, wherein either or both of said steel sheath and said flux contain, on the basis of the total weight of said wire,
0.1 to 1.2% of Si,
1.0 to 3.0% of Mn,
0.001 to 0.025% ofB, and
0.01 to 0.30% of metal fluoride (F-converted value).

4. The use according to any of claims 1 to 3, wherein said steel sheath contains, on the basis of the total weight of said steel sheath,
0.010% or less of P.

5. The use according to claim 1, wherein said titanium oxide contains, on the basis of the total weight of said titanium oxide,
0.04% or less of Nb,
0.01 to 0.07% of V, and
0.06% or less of (Nb + 0.5xV

6. The use according to claims 1 or 5, wherein said titanium oxide contains as impurities, on the basis of the total weight of said titanium oxide,
0.05% or less of P, and
0.5% or less of Ca.

7. The use according to claim 1, wherein said titanium oxide has
a water content (measured at 450°C in Ar atmosphere by KF method) of 700 ppm or less, and
a particle size distribution of from 50 to 400 µm.

8. The use according to any of claims 1 to 7, wherein said flux contains, on the basis of the total weight of said wire,
0.01 to 1.0% of an arc stabilizer;
0.1 to 3.0% of a slag forming agent;
5.0% or less of a deoxidizer;
1.0% or less of a dehydrogenating agent, and
at least one of the following: 0.2 to 0.8% of Mg, 5.0% or less ofNi, 13.0% or less of Cr, 3.0% or less of Mo, and 0.1 % or less of C.

9. The use according to claim 8, wherein said flux contains, on the basis of the total weight of said wire,
at least one of the following: 1 to 4% ofNi, 0.2 to 3.5% of Cr, 0.1 to 1.1% of Mo, and 0.5% or less of A1 and/or Zr.

## Patentansprüche

1. Verwendung eines Fülldrahtes zum Schutzgasschweißen eines Stahls und unter Verwendung des geschweißten Stahls in einer Umgebung mit niedriger Temperatur in einem Bereich von -60 bis -80°C, wobei der Draht einen Stahlmantel und eine Titan(IV)-oxid-Flussmittelfüllung in dem Stahlmantel umfasst, auf der Basis des Gesamtgewichts des Drahtes,
3 bis 9% Titanoxid (TiO₂-konvertierter Wert) mit einer spezifischen Schüttdichte von 1,0 bis 4,0, einem Wassergehalt (gemessen bei 450°C in Ar-Atmosphäre anhand des KF-Verfahrens) von 1000 ppm oder weniger und einer maximalen Partikelgröße von 500 µm oder weniger, und
0,0001 bis 0,0120% Nb,
wobei der genannte Draht ferner 0,02% oder weniger V,
0,0001 bis 0,0150% (Nb + 0,5xV) und
0,02% oder weniger P enthält,
und
wobei das in dem genannten Flussmittel enthaltene Titanoxid auf der Basis des Gesamtgewichts des genannten Titanoxids folgende Unreinheiten enthält:
0,05% oder weniger Nb,
0,08% oder weniger V und
0,07% oder weniger (Nb + 0,5xV).

2. Verwendung nach Anspruch 1, wobei der Draht 0,0001 bis 0,0100% Nb enthält,
wobei der genannte Draht ferner 0,015% oder weniger V,
0,0010-0,0100% (Nb + 0,5xV) und
0,015% oder weniger P enthält.

3. Verwendung nach Anspruch 1 oder 2, wobei der genannte Stahlmantel und/oder das genannte Flussmittel auf der Basis des Gesamtgewichts der genannten Elektrode Folgendes enthält/enthalten:
0,1 bis 1,2% Si,
1,0 bis 3,0% Mn,
0,001 bis 0,025% B und
0,01 bis 0,30% Metallfluorid (F-konvertierter Wert).

4. Verwendung nach einem der Ansprüche 1 bis 3, wobei der genannte Stahlmantel auf der Basis des Gesamtgewichts des genannten Stahlmantels Folgendes enthält:
0,010% oder weniger P.

5. Verwendung nach Anspruch 1, wobei das genannte Titanoxid auf der Basis des Gesamtgewichts des genannten Titanoxids Folgendes enthält:
0,04% oder weniger Nb,
0,01 bis 0,07% V und
0,06% oder weniger (Nb + 0,5xV).

6. Verwendung nach Anspruch 1 oder 5, wobei das genannte Titanoxid auf der Basis des Gesamtgewichts des genannten Titanoxids folgende Unreinheiten enthält:
0,05% oder weniger P und
0,5% oder weniger Ca.

7. Verwendung nach Anspruch 1, wobei das genannte Titanoxid Folgendes aufweist:
einen Wassergehalt (gemessen bei 450°C in Ar-Atmosphäre anhand des KF-Verfahrens) von 700 ppm oder weniger und
eine Partikelgrößenverteilung zwischen 50 und 400 µm.

8. Verwendung nach einem der Ansprüche 1 bis 7, wobei das genannte Flussmittel auf der Basis des Gesamtgewichts des genannten Drahtes Folgendes enthält:
0,01 bis 1,0% eines Lichtbogenstabilisators;
0,1 bis 3,0% eines schlackenbildenden Mittels;
5,0% oder weniger eines Desoxydationsmittels;
1,0% oder weniger eines Dehydrierungsmittels und
wenigstens einen der folgenden Bestandteile: 0,2 bis 0,8% Mg, 5,0% oder weniger Ni, 13,0% oder weniger Cr, 3,0% oder weniger Mo und 0,1% oder weniger C.

9. Verwendung nach Anspruch 8, wobei das genannte Flussmittel auf der Basis des Gesamtgewichts des genannten Drahts wenigstens einen der folgenden Bestandteile enthält:
1 bis 4% Ni, 0,2 bis 3,5% Cr, 0,1 bis 1,1% Mo und 0,5% oder weniger Al und/oder Zr.

## Revendications

1. Utilisation d'un fil fourré pour soudage à l'arc sous atmosphère gazeuse d'un acier et utilisation de l'acier soudé dans des environnements basse température dans une gamme allant de -60 à -80° C, dans laquelle le fil comprend une gaine en acier et un fondant à base d'oxyde de titane chargé dans la gaine en acier contenant, sur la base du poids total du fil,
de 3 à 9 % d'oxyde de titane (valeur convertie en TiO₂) présentant une densité apparente spécifique de 1,0 à 4,0, une teneur en eau (mesurée à 450° C dans une atmosphère d'Ar par la méthode de KF de 1000 ppm ou moins, et une taille de particules maximale de 500 µm ou moins, et
de 0,0001 à 0,120 % de Nb,
dans laquelle ledit fil contient en outre 0,02 % ou moins de V,
de 0,0001 à 0,0150 % de (Nb + 0,5 × V), et
0,02 % ou moins de P,
et
dans laquelle l'oxyde de titane chargé dans ledit fondant contient en tant qu'impuretés, sur la base du poids total dudit oxyde de titane,
0,05 % ou moins de Nb,
0,08 % ou moins de V, et
0,07 % ou moins de (Nb + 0,5 × V).

2. Utilisation selon la revendication 1, dans laquelle le fil contient
de 0,0001 à 0,0100 % de Nb,
dans laquelle ledit fil contient en outre 0,015 % ou moins de V,
0,0010 - 0,0100 % de (Nb + 0,5 × V), et
0,015 % ou moins de P.

3. Utilisation selon la revendication 1 ou la revendication 2, dans laquelle l'un ou l'autre ou les deux parmi ladite gaine en acier et ledit fondant contiennent, sur la base du poids total dudit fil,
de 0,1 à 1,2 % de Si,
de 1,0 à 3,0 % de Mn,
de 0,001 à 0,025 % de B, et
de 0,01 à 0,30 % de fluorure de métal (valeur convertie en F).

4. Utilisation selon l'une quelconque des revendications 1 à 3, dans laquelle ladite gaine en acier contient, sur la base du poids total de ladite gaine en acier,
0,010 % ou moins de P.

5. Utilisation selon la revendication 1, dans laquelle ledit oxyde de titane contient, sur la base du poids total dudit oxyde de titane,
0,04 % ou moins de Nb,
de 0,01 à 0,07 % de V, et
0,06 % ou moins de (Nb + 0,5 × V).

6. Utilisation selon la revendication 1 ou la revendication 5, dans laquelle ledit oxyde de titane contient en tant qu'impuretés, sur la base du poids total dudit oxyde de titane,
0,05 % ou moins de P, et
0,5 % ou moins de Ca.

7. Utilisation selon la revendication 1, dans laquelle ledit oxyde de titane présente
une teneur en eau (mesurée à 450° C sous une atmosphère d'Ar par la méthode de KF) de 700 ppm ou moins, et
une répartition de taille de particules de 50 à 400 µm.

8. Utilisation selon l'une quelconque des revendications 1 à 7, dans laquelle ledit fondant contient, sur la base du poids total dudit fil,
de 0,01 à 1,0 % d'un agent stabilisateur de l'arc ;
de 0,1 à 3,0 % d'un agent formateur de scories ;
5,0 % ou moins d'un agent désoxydant ;
1,0 % ou moins d'un agent de déshydrogénation, et
au moins un parmi ce qui suit : de 0,2 à 0,8 % de Mg, 5,0 % ou moins de Ni, 13,0 % ou moins de Cr, 3,0 % ou moins de Mo, et 0,1 % ou moins de C.

9. Utilisation selon la revendication 8, dans laquelle ledit fondant contient, sur la base du poids total dudit fil,
au moins un parmi ce qui suit : de 1 à 4 % de Ni, de 0,2 à 3,5 % de Cr, de 0,1 à 1,1 % de Mo, et 0,5 % ou moins d'Al et/ou de Zr.
